# DEMANDE DE BREVET EUROPEEN

(11) **EP 2 505 909 A2**
(43) Date de publication de la demande: **03.10.2012**
(21) Numéro de dépôt: 12158119.3
(22) Date de dépôt: 05.03.2012
(51) Int. Cl.: F21S 8/10, F21V 5/00, G02B 17/08

(54) **Système optique pour générer un faisceau lumineux composite de large ouverture angulaire**

(30) Priorité: 31.03.2011 FR 1152682
(71) Demandeur: Valeo Vision, 93012 Bobigny (FR)
(72) Inventeur: De Lamberterie, Antoine, 75019 PARIS (FR)

(57) **Abrégé**

La présente invention concerne un système optique (14) pour générer, à partir d'une source lumineuse (12) et suivant un axe optique (X-X), un faisceau lumineux composite comportant au moins un faisceau lumineux central et au moins un faisceau lumineux périphérique entourant ledit faisceau lumineux central, et destiné à être dirigé vers un diffuseur optique pour répartir ledit faisceau lumineux composite d'une manière prédéterminée dans un plan orthogonal audit axe optique (X-X), **caractérisé en ce qu'**il est configuré pour engendrer, dans un deuxième plan comprenant ledit axe optique (X-X), ledit faisceau lumineux central et/ou ledit faisceau lumineux périphérique de manière que des rayons lumineux (16.1, 16.2, 17.1, 17.2) dudit faisceau lumineux central et/ou dudit faisceau lumineux périphérique soient respectivement, de part et d'autre dudit axe optique (X-X), inclinés par rapport audit axe optique (X-X).

## Description

La présente invention concerne un système optique pour générer un faisceau lumineux, ainsi qu'un module optique comprenant un tel système optique.

Quoique non exclusivement, le système optique et le module optique selon l'invention sont destinés à équiper des véhicules automobiles, le faisceau lumineux généré remplissant alors une fonction d'éclairage (par exemple faisceaux de croisement, de route, d'antibrouillard) ou une fonction de signalisation (par exemple feux de position, feux indicateurs de changement de direction, feux indicateurs de freinage, feux de recul, feux arrières de brouillard, feux diurnes).

Par le document FR 2 919 913, on connaît déjà un système optique pour générer, à partir d'une source lumineuse unique et suivant un axe optique, un faisceau lumineux composite composé d'une pluralité de faisceaux lumineux parmi lesquels un faisceau lumineux central et un faisceau lumineux périphérique entourant le faisceau lumineux central. A cette fin, un collimateur est disposé au voisinage d'une source lumineuse unique, par exemple une diode électroluminescente (LED) apte à émettre de la lumière de façon lambertienne dans un demi-espace, cette source étant située sur l'axe optique dudit système optique.

Ce collimateur est généralement réalisé en une pièce monolithique, à symétrie de révolution autour de l'axe optique, et dont les contours ont des formes particulières aptes à générer le faisceau central et le faisceau périphérique. Plus précisément, d'un premier côté où est disposée la source lumineuse, le contour du collimateur présente une portion centrale et une portion périphérique jointes l'une à l'autre au niveau d'une portion intermédiaire cylindrique et, d'un second côté opposé au premier côté, une portion aval plane et perpendiculaire à l'axe optique. La portion centrale présente une forme convexe, avec un foyer situé au niveau de la source. La portion périphérique présente une forme parabolique, dont le foyer est également situé au niveau de la source lumineuse.

Ainsi, le faisceau lumineux central est généré par réfraction des rayons lumineux émis par la source lumineuse sur la portion centrale du contour du collimateur, les rayons lumineux de ce faisceau lumineux central étant alors parallèles entre eux et également parallèles à l'axe optique. Le faisceau lumineux périphérique, quant à lui, est généré par réfraction des rayons lumineux émis par la source lumineuse sur la portion intermédiaire, puis par réflexion totale de ces mêmes rayons lumineux sur la portion périphérique du collimateur, les rayons lumineux de ce faisceau lumineux périphérique étant parallèles à ceux du faisceau lumineux central et ce faisceau lumineux périphérique entourant le faisceau lumineux central.

Le faisceau lumineux composite ainsi généré, qui comporte les faisceaux lumineux central et périphérique, est destiné à être dirigé vers un diffuseur optique muni d'une pluralité de microstructures agencées pour produire un éclairage qui, dans un plan orthogonal à l'axe optique du collimateur, présente certaines spécificités liées à la réglementation en vigueur pour le feu d'éclairage et/ou de signalisation pour véhicules automobiles qu'il est destiné à former, notamment en ce qui concerne l'uniformité et l'ouverture angulaire de ce faisceau. Ce diffuseur optique peut se présenter soit sous la forme d'un écran (muni des microstructures) rapporté le plus près possible du collimateur, soit, préférentiellement, sous la forme des microstructures venues directement de matière avec le collimateur. Dans le cas d'un système monobloc, on notera que les microstructures peuvent seulement être placées sur la face de sortie du diffuseur.

Le collimateur décrit dans le document précité FR 2 919 913 est particulièrement avantageux, dans la mesure où il est formé en une unique pièce monolithique, qui peut être fabriquée de façon simple à partir d'un moule de forme complémentaire à celle de cette pièce, et où il permet de rediriger efficacement l'ensemble du flux lumineux émis, dans un demi-espace, par la source lumineuse.

Toutefois, l'ouverture angulaire du faisceau lumineux composite généré par un collimateur de type monobloc est limitée par l'angle limite de réflexion totale des microstructures qui forment le diffuseur optique, au niveau desquelles il importe de réfracter les rayons lumineux issus du collimateur. En particulier, pour un faisceau lumineux composite à rayons parallèles entre eux et parallèles à l'axe optique, cet angle limite induit une ouverture angulaire maximale de l'ordre de 35°. Or, si la réglementation applicable à la plupart des feux pour véhicules automobiles exige des ouvertures angulaires inférieures (par exemple 20°) à cet angle limite, il est au contraire exigé pour certains de ces feux une ouverture angulaire supérieure. Pour un feu de recul, par exemple, l'ouverture angulaire horizontale doit être de l'ordre de 45° (avec une intensité lumineuse à 45° voisine de 15 à 20% par rapport à l'intensité lumineuse totale) et l'ouverture angulaire verticale doit être de l'ordre de 5°.

On sait de plus, par le document EP 2 230 446, qu'en vue de s'affranchir de cette limitation, il est possible d'utiliser comme diffuseur optique un écran additionnel sur lequel les microstructures sont placées sur la face d'entrée de l'élément diffuseur. Cette configuration permet d'obtenir, après traversée du diffuseur optique, un faisceau d'éclairage et/ou de signalisation présentant une ouverture angulaire supérieure à la limite d'ouverture induite par l'angle limite de réflexion totale pour des microlentilles à surface concave, l'ouverture angulaire horizontale du faisceau lumineux résultant pouvant ainsi atteindre par exemple égale à 45° ou 50°.

Toutefois, cette solution implique l'ajout d'au moins un élément optique intermédiaire, ce qui rend donc le module optique plus complexe à fabriquer. Dans ce cas, il est nécessaire d'aligner ces éléments. Un tel module optique est en outre plus coûteux et encombrant, et ajoute par ailleurs des pertes supplémentaires de lumière dues aux coefficients de Fresnel (de l'ordre de 15 à 20%).

Le but de la présente invention est donc de permettre d'accroître l'ouverture angulaire du faisceau lumineux composite en sortie du module optique précité en vue d'autoriser la réalisation de feux d'éclairage et/ou de signalisation à large ouverture angulaire (par exemple un feu de recul), tout en disposant d'un module optique compact et de conception simple, en particulier en favorisant la fabrication d'une unique pièce monolithique comportant le système optique et le diffuseur optique.

Dans ce but, selon l'invention le système optique destiné à générer, à partir d'une source lumineuse et suivant un axe optique, un faisceau lumineux composite :
- comportant au moins un faisceau lumineux central et au moins un faisceau lumineux périphérique entourant ledit faisceau lumineux central, et
- destiné à être dirigé vers un diffuseur optique pour répartir ledit faisceau lumineux composite d'une manière prédéterminée dans un premier plan orthogonal audit axe optique,
est remarquable en ce qu'il est configuré pour engendrer, dans un deuxième plan comprenant ledit axe optique, ledit faisceau lumineux central et/ou ledit faisceau lumineux périphérique de manière que des rayons lumineux dudit faisceau lumineux central et/ou dudit faisceau lumineux périphérique soient respectivement, de part et d'autre dudit axe optique, inclinés par rapport audit axe optique.

Ainsi, grâce à l'invention, le faisceau lumineux composite peut être au moins en partie pré-orienté d'un angle non nul par rapport à l'axe optique, ce qui permet de dépasser ensuite l'ouverture angulaire correspondant à l'angle limite de réflexion totale au niveau du diffuseur optique, pour atteindre l'ouverture angulaire souhaitée dans un plan de propagation du faisceau (comprenant l'axe optique), sans nécessiter l'ajout d'un système optique intermédiaire, ce que ne permet pas les techniques antérieures décrites ci-dessus (pour lesquelles le système optique est un collimateur qui génère un faisceau lumineux formé de rayons parallèles à l'axe optique).

En outre, le faisceau lumineux composite, issu de la juxtaposition des faisceaux lumineux central et périphérique, ne reproduit pas l'inclinaison du faisceau lumineux central et/ou périphérique car il a été modifié par la traversée du diffuseur optique destiné à atténuer sensiblement les contrastes dans la distribution de lumière, dans un plan orthogonal à l'axe optique, dudit faisceau lumineux composite.

Par ailleurs, il importe peu que le faisceau lumineux composite ne soit pas homogène après avoir été réparti dans le premier plan par le diffuseur optique, car pour des applications telles que la réalisation d'un feu de recul pour véhicule automobile, pour lequel le niveau d'intensité est élevé (par exemple de l'ordre de 100 candelas) pour l'usager qui l'observe, la présence de zones à éclairement inférieur ou nul ne sera pas handicapante. En outre, on peut noter que les dimensions des zones de faible luminance sont suffisamment réduites pour ne pas être visibles par un observateur.

La présente invention, grâce à cette pré-orientation d'au moins une partie du faisceau lumineux composite avant son passage à travers le diffuseur optique (qui peut être un écran rapporté sur le système optique ou, de préférence, fait partie intégrante dudit système optique), autorise ainsi, après passage à travers ledit diffuseur optique, une répartition de la lumière dans un cône dont l'ouverture angulaire est supérieure à celle correspondant à l'angle limite de réflexion totale des microstructures dudit diffuseur optique (au niveau desquelles on souhaite opérer une réfraction des rayons lumineux) conformément à la technique antérieure. L'ouverture angulaire peut donc atteindre une valeur élevée dans un plan de propagation du faisceau, par exemple 45°, en fonction de l'amplitude de cette pré-orientation.

On notera que l'invention, en engendrant une forme particulière de faisceau lumineux central et/ou de faisceau lumineux périphérique dans un plan comprenant l'axe optique, rompt la symétrie de révolution des systèmes optiques de la technique antérieure décrits ci-dessus, et permet ainsi de déformer la répartition lumineuse du faisceau composite généré pour que l'ouverture angulaire souhaitée puisse être atteinte dans un plan comprenant l'axe optique.

En outre, on notera que la présente invention peut être mise en oeuvre par une simple adaptation des collimateurs de l'art antérieur décrits ci-dessus, si bien que le système optique mettant en oeuvre le procédé selon l'invention est de conception simple (en particulier en une unique pièce monolithique) tout en étant sensiblement compact.

De préférence, le système optique selon l'invention est configuré pour engendrer, dans le deuxième plan, le faisceau lumineux central et le faisceau lumineux périphérique de manière que l'ensemble des rayons lumineux dudit faisceau lumineux central et dudit faisceau lumineux périphérique soient respectivement, de part et d'autre de l'axe optique, inclinés par rapport audit axe optique.

Lorsque, dans le deuxième plan, l'ouverture angulaire du faisceau lumineux composite doit être au moins égale à 45° après avoir été réparti dans ledit premier plan par le diffuseur optique, des rayons lumineux du faisceau lumineux central et/ou du faisceau lumineux périphérique peuvent être respectivement, avant d'être répartis dans le premier plan par ledit diffuseur optique, de part et d'autre de l'axe optique, inclinés d'un angle compris entre 5° et 15° par rapport audit axe optique.

Dans ce cas, de préférence, dans le deuxième plan, des rayons lumineux du faisceau lumineux central et/ou du faisceau lumineux périphérique sont respectivement, avant d'être répartis dans le premier plan par le diffuseur optique, de part et d'autre de l'axe optique, inclinés d'un angle compris entre 10° et 12° par rapport audit axe optique.

Selon une forme particulière de réalisation de l'invention, le système optique présente, dans le deuxième plan, une portion périphérique comprenant une première et une deuxième portions de surface sensiblement parabolique :
- disposées respectivement de part et d'autre dudit axe optique ;
- présentant un foyer commun ; et
- configurées respectivement pour que, lorsque la source lumineuse est disposée audit foyer commun, des rayons lumineux émis par ladite source soient respectivement, avant d'être répartis dans ledit premier plan par ledit diffuseur optique, de part et d'autre dudit axe optique, inclinés par rapport audit axe optique après réflexion sur lesdites portions de surface sensiblement parabolique.

Ainsi, le faisceau lumineux périphérique peut être obtenu, de part et d'autre de l'axe optique, par des portions de surface sensiblement parabolique analogues à celles des collimateurs conformes à la technique antérieure décrite ci-dessus, mais réorientés de manière que les axes respectifs desdites surfaces sensiblement paraboliques soient inclinées par rapport à l'axe optique tout en disposant ces portions de surfaces sensiblement paraboliques de sorte que leurs foyers soient confondus. Les rayons lumineux qui se réfléchissent sur ces portions se propagent ainsi respectivement suivant les axes desdites portions et sont donc inclinés par rapport à l'axe optique.

On notera que, si la présente invention peut être mise en oeuvre en générant un faisceau lumineux central et/ou périphérique convergent ou divergent par rapport au foyer commun, il est préféré de générer un faisceau divergent. A cette fin, les axes des première et deuxième portions de surface sensiblement parabolique sont, en aval de la source lumineuse par rapport à la direction de propagation des rayons lumineux émis par ladite source lumineuse, situées respectivement du côté de la portion de surface parabolique correspondante.

Selon une forme particulière de réalisation de l'invention, le système optique étant formé en une unique pièce monolithique dont la section peut comporter, dans le deuxième plan, du côté où la source lumineuse est destinée à être disposée, une portion centrale jointe à la portion périphérique au niveau d'une portion intermédiaire dont la section par ce deuxième plan est un segment de droite, ladite portion périphérique comportant les première et deuxième portions de surface sensiblement parabolique.

Pour simplifier la fabrication de la pièce monolithique, la section de la portion intermédiaire s'étend suivant une droite qui coupe l'axe optique en aval de la source lumineuse par rapport à la direction de propagation des rayons lumineux émis par ladite source lumineuse. Ainsi, la portion centrale du contour du système optique selon l'invention peut être réalisée au moyen d'un moulage qui peut aisément être retiré après fabrication.

Pour obtenir un éclairage symétrique, le système optique selon l'invention peut être symétrique par rapport à un plan qui comprend l'axe optique et qui est orthogonal au deuxième plan.

L'invention concerne également un module optique comprenant :
- une source lumineuse unique ; et
- un système optique selon l'une des formes de réalisation décrites ci-dessus pour générer, à partir de la source lumineuse disposée au niveau de l'axe optique dudit système optique, le faisceau lumineux composite.

Dans une forme de réalisation avantageuse de l'invention, le module optique comprend en outre un diffuseur optique pour répartir le faisceau lumineux composite d'une manière prédéterminée dans un plan orthogonal audit axe optique,

De préférence, le diffuseur optique fait partie intégrante dudit système optique.

De préférence, également, le diffuseur optique comprend une pluralité de motifs dont les formes sont déterminées de manière à répartir le faisceau lumineux composite d'une manière prédéterminée dans le plan orthogonal à l'axe optique.

Les figures du dessin annexé feront bien comprendre comment l'invention peut être réalisée. Sur ces figures, des références identiques désignent des éléments semblables.

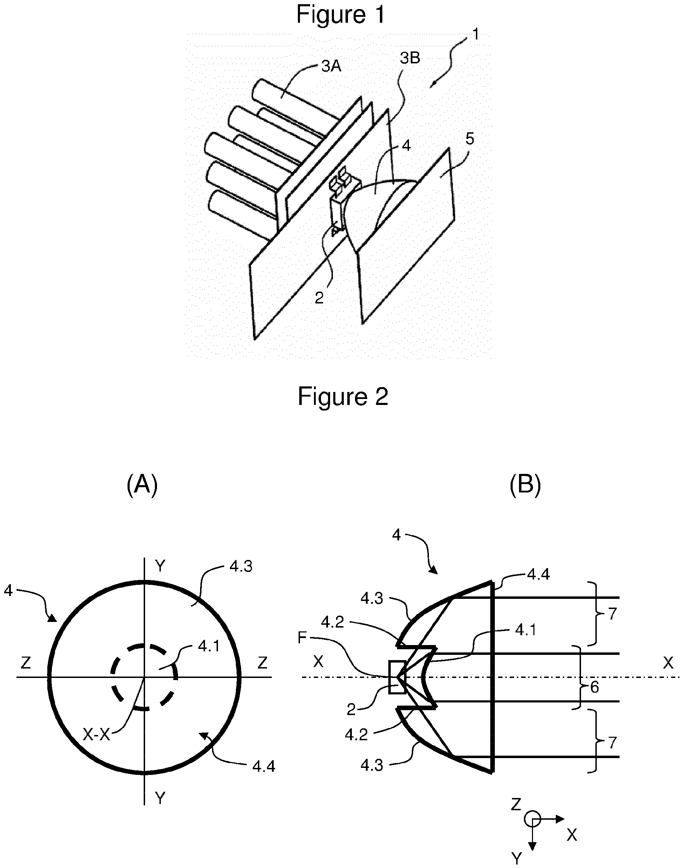

La figure 1 est une vue en perspective d'un module optique pour dispositif d'éclairage et/ou de signalisation conforme à l'art antérieur.

Les schémas A et B de la figure 2 sont deux vues en coupe, respectivement transversale et axiale par rapport à l'axe optique, du système optique intégré au module optique de la figure 1.

La figure 3 est une vue en coupe axiale du module optique de la figure 1.

La figure 4 est un schéma représentant la projection du faisceau lumineux composite généré par le système optique de la figure 2, avant répartition par le diffuseur optique, dans un plan orthogonal à l'axe optique dudit système.

La figure 5 est un schéma représentant la projection du faisceau lumineux composite généré par le système optique de la figure 2, après répartition par le diffuseur optique, dans un plan orthogonal à l'axe optique dudit système.

La figure 6 est une vue en coupe transversale d'un système optique conforme à la présente invention.

La figure 7 est une vue en coupe axiale du module optique conforme à la présente invention, équipé du système optique de la figure 6.

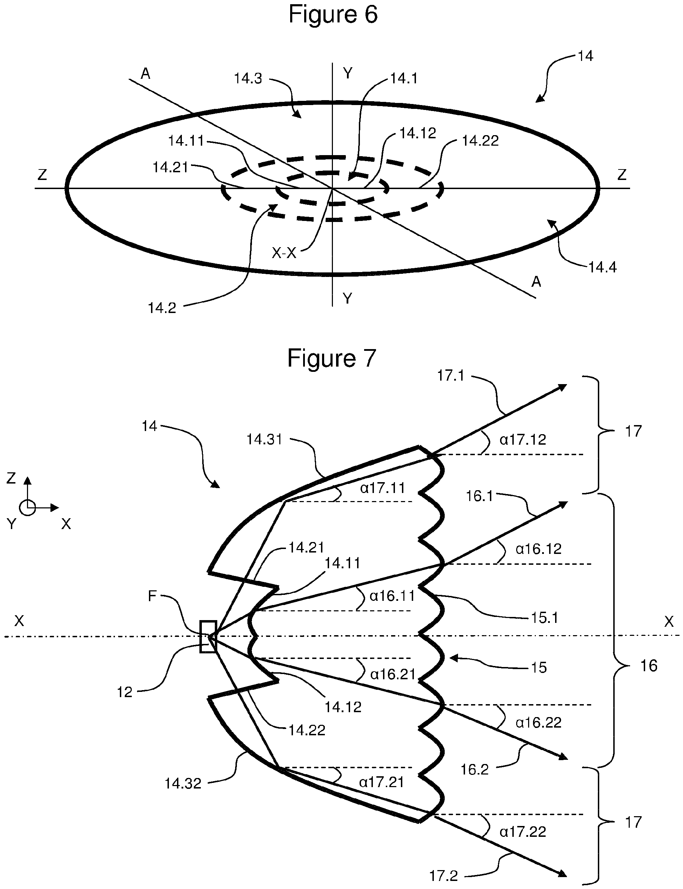

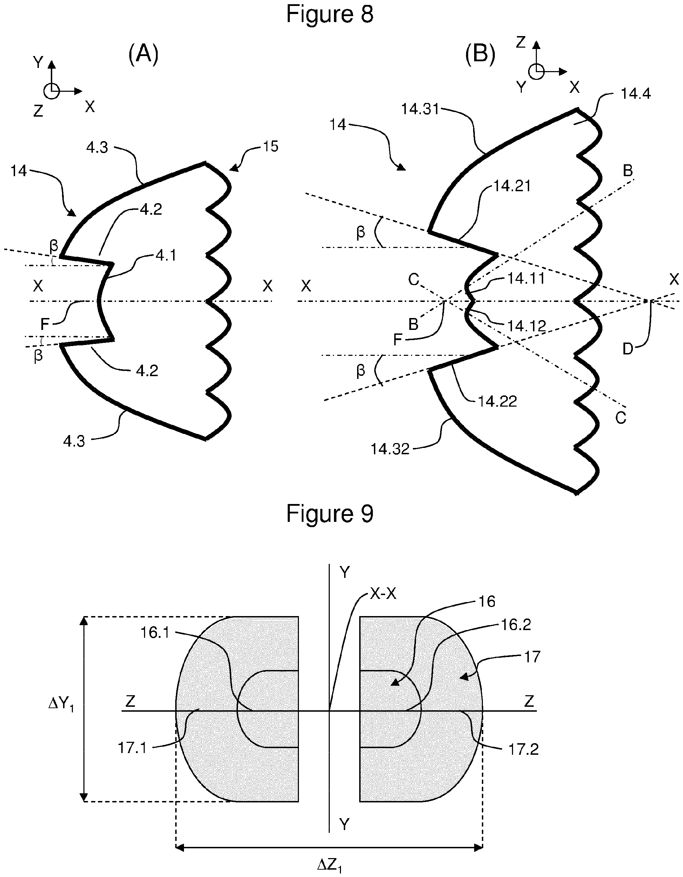

Les schémas A et B de la figure 8 sont deux vues en coupe axiale du système optique intégré au module optique de la figure 6.

La figure 9 est un schéma représentant la projection du faisceau lumineux composite généré par le système optique de la figure 6, avant répartition par le diffuseur optique, dans un plan orthogonal à l'axe optique dudit système.

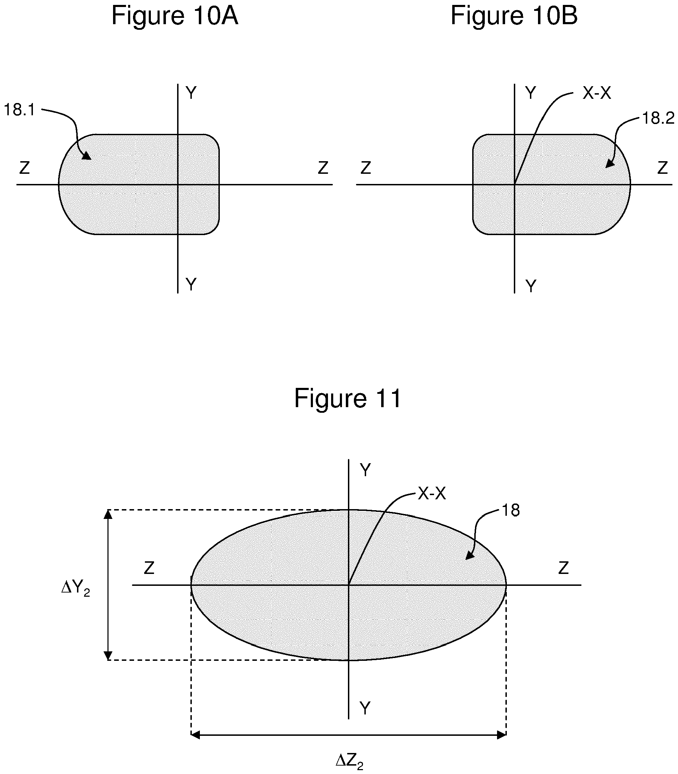

Les figures 10A et 10B sont des schémas représentant les projections des contributions des deux côtés opposés du système optique de la figure 6 au faisceau lumineux composite, après répartition par le diffuseur optique, dans un plan orthogonal à l'axe optique dudit système.

La figure 11 est un schéma représentant la projection du faisceau lumineux composite généré par le système optique de la figure 6, après répartition par le diffuseur optique, dans un plan orthogonal à l'axe optique dudit système.

Sur ces figures, les systèmes optiques sont représentés de façon schématique, sans égard pour les échelles, uniquement avec les éléments qui ont un rôle optique significatif (au contraire des éléments de montage et de réglage mécanique).

Le module optique 1 conforme à l'art antérieur, représenté sur la figure 1, comporte une source lumineuse 2, par exemple une diode électroluminescente (LED) dont l'émission est lambertienne dans un demi-espace, par exemple de couleur rouge pour un feu stop. Cette source 2 est associée à un radiateur 3A et fixée de façon connue sur un circuit imprimé 3B. Le module 1 comporte également un collimateur 4, agencé par rapport à la source lumineuse 2 de manière à générer un faisceau lumineux composite 6-7 comprenant un faisceau lumineux central 6 et un faisceau lumineux périphérique 7 entourant ledit faisceau lumineux central 6 de manière contiguë, les rayons lumineux de ces deux faisceaux 6 et 7 étant parallèles entre eux et également parallèles à l'axe optique X-X dudit module 1. Le module optique 1 comporte enfin un diffuseur optique 5 disposé en aval du collimateur 4 (mais il peut également être sous la forme d'un apport de matière sur le collimateur 4) afin de distribuer la lumière du faisceau lumineux composite 6-7 suivant la réglementation applicable au feu d'éclairage et/ou de signalisation correspondant.

Le collimateur 4 est représenté plus en détails sur la figure 2. Il est réalisé en une pièce monolithique, à symétrie de révolution autour de l'axe optique X-X (schéma A de la figure 2), dont le contour 4.1 à 4.4 (schéma B de la figure 2) a une forme apte à générer le faisceau lumineux central 6 et le faisceau lumineux périphérique 7.

Plus précisément, du côté de la source lumineuse 2, le contour du collimateur 4 présente une portion centrale 4.1 et une portion périphérique 4.3 jointes l'une à l'autre au niveau d'une portion intermédiaire droite 4.2, sensiblement parallèle à l'axe optique X-X. Du côté opposé à la source lumineuse 2, le contour du collimateur 4 présente également une portion aval 4.4 plane et perpendiculaire à l'axe optique X-X.

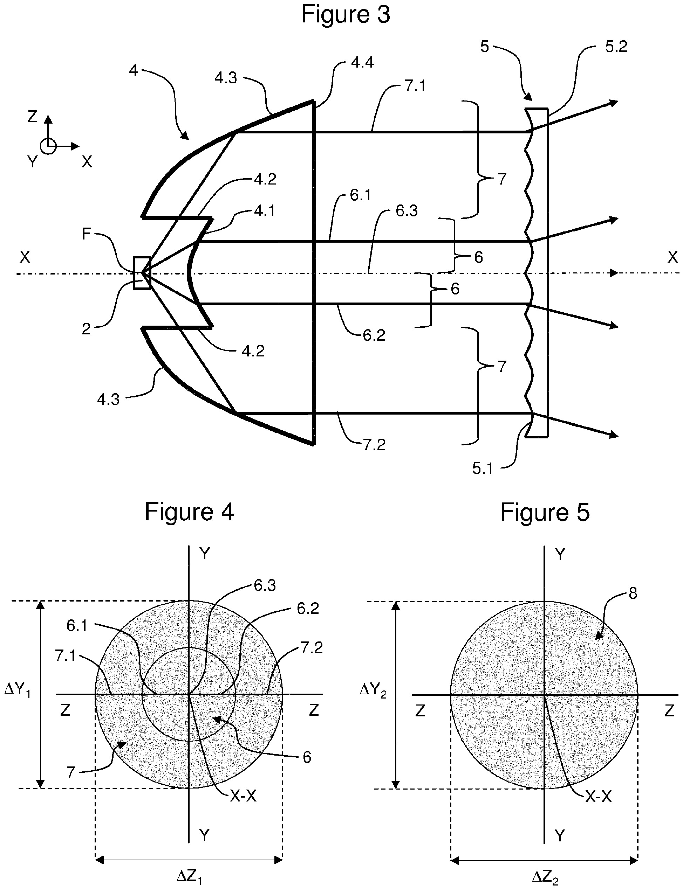

La portion centrale 4.1 forme avec la partie centrale de la portion aval 4.4 une lentille convexe dont le foyer est situé au niveau de la source 2, de sorte que le faisceau lumineux central 6 peut être obtenu (figure 3) par réfraction des rayons lumineux 6.1, 6.2 et 6.3 émis par la source 2 sur la portion centrale 4.1 du contour du collimateur 4 puis sur la partie centrale de la portion aval 4.4, ces rayons lumineux 6.1 à 6.3 étant alors parallèles à l'axe optique X-X.

La portion périphérique 4.3 présente une forme sensiblement parabolique, dont l'axe de symétrie est l'axe optique X-X et le foyer F est situé au niveau de la source 2, de sorte que le faisceau lumineux périphérique 7 peut être obtenu (figure 3) par réfraction des rayons lumineux 7.1 et 7.2 émis par la source 2 sur la portion intermédiaire 4.2, puis par réflexion totale sur la surface correspondant à ladite portion périphérique 4.3 et enfin par réfraction sur la partie périphérique de la portion aval 4.4, ces rayons lumineux 7.1 et 7.2 étant alors également parallèles à l'axe optique X-X (avant leur passage dans le diffuseur optique 5). De plus, le faisceau lumineux périphérique 7 entoure le faisceau lumineux central 6 de manière contiguë.

Le faisceau lumineux composite ainsi généré, qui comporte les faisceaux lumineux central 6 et périphérique 7, est destiné à être dirigé vers le diffuseur optique 5 (figure 3), qui présente la forme d'un écran dont la surface 5.2 tournée vers le collimateur 4 est munie d'une pluralité de microstructures 5.1 et l'autre surface, est plane, de manière à produire un éclairage qui, dans un plan (Y-Y ; Z-Z) orthogonal à l'axe optique X-X du module optique 1, présente certaines particularités liés à la réglementation en vigueur pour les feux d'éclairage et/ou de signalisation pour véhicules automobiles, notamment en ce qui concerne l'uniformité et l'ouverture angulaire.

La projection du faisceau lumineux composite ainsi généré dans un premier plan (Y-Y ; Z-Z) orthogonal à l'axe optique X-X, avant passage dans le diffuseur optique 5, est représentée sur la figure 4. Ce faisceau est issu de la juxtaposition du faisceau lumineux central 6, au centre, et du faisceau lumineux périphérique 7, autour dudit faisceau lumineux central 6. Les dimensions de cette projection du faisceau composite, suivant les deux axes Y-Y et Z-Z orthogonaux entre eux, sont désignées par DY₁ et ΔZ₁ sur la figure 4.

Comme évoqué plus haut, les ouvertures angulaires générées par le diffuseur 5 sont limitées par l'angle limite de réflexion totale au niveau des motifs 5.1 du diffuseur optique 5. Comme cela est illustré par la figure 5 qui représente la projection du faisceau lumineux composite dans le premier plan (Y-Y ; Z-Z) orthogonal à l'axe optique X-X après passage dans le diffuseur optique 5 et à distance de ce diffuseur, il en résulte alors un faisceau lumineux composite dont les ouvertures angulaires suivant les deux axes Y-Y et Z-Z (auxquelles correspondent, sur la figure 5, les dimensions ΔY₂ et ΔZ₂ de la projection du faisceau dans ledit plan (Y-Y- ; Z-Z), ne peuvent atteindre 45° sans avoir recours à un emplacement des microstructures sur la face d'entrée d'un diffuseur, ce qui implique alors que ce diffuseur soit distinct du collimateur.

Afin d'améliorer ce module optique 1 conforme à l'art antérieur et permettre de former le système optique et le diffuseur optique en une unique pièce monolithique, l'invention propose de remplacer le collimateur 4 par un système optique 14 apte à générer, non plus un faisceau lumineux de rayons parallèles à l'axe optique et à symétrie de révolution autour dudit axe optique X-X, mais un faisceau dont les caractéristiques diffèrent en fonction du plan (comprenant l'axe optique X-X) dans lequel les rayons lumineux se propagent.

Ce système optique 14 est réalisé en une pièce monolithique de forme oblongue, dont le grand axe est disposé par exemple selon l'axe Z-Z ainsi qu'on l'a représenté sur la figure 6, au contraire du collimateur 4 dont la forme est circulaire dans ce même plan (schéma A de la figure 2). Ce système optique 14 est agencé par rapport à la source lumineuse 12 de manière à générer un faisceau lumineux composite 16-17, comprenant un faisceau lumineux central 16 et un faisceau lumineux périphérique 17 entourant ledit faisceau lumineux central 16 de manière contiguë.

L'angle d'incidence des rayons lumineux sur le plan moyen contenant le diffuseur 15 étant non nul, les rayons lumineux émergeants peuvent être déviés d'un angle supérieur à 45°, ce qui autorise la réalisation d'un feu de recul d'ouverture angulaire horizontale de l'ordre de 45°).

Pour cela, le contour de la pièce monolithique formant le système optique 14 présente différentes formes selon le plan de coupe de celui-ci. En particulier, pour une coupe dans un plan (X-X ; Y-Y), le contour du système 14, représenté sur le schéma A de la figure 8, est sensiblement identique à celui du collimateur 4 des figures 2 et 3.

Toutefois, pour une coupe dans le deuxième plan (X-X ; Z-Z), orthogonal au plan (X-X ; Y-Y) précité, le contour du système 14, représenté sur le schéma B de la figure 8, présente une forme adaptée à la formation d'un faisceau d'ouverture angulaire élevée. Du côté de la source lumineuse 12, le contour du système optique 14 présente une portion périphérique 14.3 formée de deux portions 14.31 et 14.32 de forme sensiblement parabolique, d'inclinaison supérieure à la portion périphérique 4.3 du collimateur 4 des figures 2 et 3 dans le plan de coupe (X-X ; Y-Y).

Le contour du système optique 14 présente également une portion centrale 14.1 formée de deux portions 14.11 et 14.12 agencées pour dévier les rayons lumineux 16.1 et 16.2 par rapport à l'axe optique X-X, suivant des angles respectivement α16.1 et α16.2.

La portion périphérique 14.3 et la partie centrale 14.1 sont jointes l'une à l'autre par une portion intermédiaire 14.2 formée de deux portions 14.21 et 14.22 droites et formant avec l'axe optique X-X des angle β positifs, de telle sorte que lesdites portions 14.21 et 14.22 s'étendent suivant une droite qui coupe l'axe optique en un point D situé en aval de la source lumineuse (par rapport à la direction de propagation des rayons lumineux émis par ladite source). Ainsi, par ces angles β (qui peuvent être positifs ou bien nuls), la portion centrale 14.1 de la pièce 14 peut être formée au moyen d'un outil de moulage qui peut être aisément retiré.

Plus précisément, en référence au schéma B de la figure 8, dans le deuxième plan (X-X ; Z-Z) précité, la portion périphérique 14.3 est formée de d'une première portion de surface sensiblement parabolique 14.31, d'un côté de l'axe optique X-X, ainsi qu'une deuxième portion de surface sensiblement parabolique 14.32, de l'autre côté de l'axe optique X-X. Les foyers de ces deux portions de surface sensiblement parabolique sont confondus, de sorte que lesdites portions de surface sensiblement parabolique 14.31 et 14.32 présentent un foyer commun F.

De plus, conformément à l'invention, ces deux portions 14.31 et 14.32, qui sont disposées respectivement de part et d'autre de l'axe optique X-X, sont configurées respectivement pour que, lorsque la source lumineuse 12 est disposée au niveau du foyer commun F auxdites portions, des rayons tels que les rayons lumineux 17.1 et 17.2 émis par ladite source 12 soient respectivement inclinés par rapport audit axe optique X-X, suivant des angles α17.1 et α17.2, après réflexion sur lesdites portions de surfaces paraboliques respectivement 14.31 et 14.32.

Afin que le faisceau lumineux périphérique 17 soit un faisceau divergent (par rapport à la direction de propagation dudit faisceau), les axes B-B et C-C (schéma B de la figure 8), respectivement de la première portion 14.31 et de la deuxième portion 14.32 de surface sensiblement parabolique, sont respectivement, en aval de la source lumineuse 12 (par rapport à la direction de propagation dudit faisceau), situées du côté de la portion de surface parabolique correspondante. On entend ici par axe d'une portion de surface sensiblement parabolique l'axe de symétrie de la surface parabolique correspondante si celle-ci se trouvant en entier et non simplement en une portion de celle-ci.

Ainsi, dans le plan de coupe (X-X, Z-Z), les rayons 17.1 et 17.2 du faisceau lumineux périphérique 17 peuvent être dirigés de façon adéquate (figure 7) par réfraction respectivement sur les portions 14.21 et 14.22, puis par réflexion totale respectivement sur les portions de surfaces sensiblement parabolique 14.31 et 14.32 (qui font partie de la portion périphérique 14.3), ces rayons lumineux 17.1 et 17.2 étant alors respectivement, de part et d'autre de l'axe optique X-X, inclinés par rapport audit axe optique X-X suivant des angle α17.11 (positif) et α17.21 (négatif).

Le faisceau lumineux central 16, quant à lui, peut être obtenu (figure 7) par réfraction des rayons lumineux 16.1 et 16.2 émis par la source 12 respectivement sur les portions 14.11 et 14.12, ces rayons lumineux 16.1 et 16.2 étant alors divergents et inclinés par rapport à l'axe optique X-X suivant des angles α16.11 (positif) et α16.21 (négatif).

Du côté opposé à la source lumineuse 12, le contour du système 14 présente un ensemble de motifs 15.1 formant le diffuseur optique 15.

Entre les deux plans de coupe précités (X-X ; Y-Y) et (X-X ; Z-Z), par exemple dans le plan de coupe (X-X ; A-A figure 6), la forme du contour du système 14 évolue par exemple de façon continue et progressive, de la forme dans le plan (X-X ; Y-Y) (schéma A de la figure 8) à la forme dans le plan (X-X ; Z-Z) (schéma B de la figure 8), la pièce monolithique formant le système optique 14 ne présentant alors aucune discontinuité.

Après traversée du diffuseur optique 15 (figure 7), l'éclairage ainsi généré peut présenter une distribution conforme à la réglementation en vigueur et une ouverture angulaire horizontale de l'ordre de 45°, les rayons lumineux 16.1, 16.2, 17.1 et 17.2 étant alors inclinés par rapport à l'axe optique X-X suivant des angles respectivement α16.12, α16.22, α17.12 et α17.22 supérieurs aux angles respectivement α16.11, α16.21, α17.11 et α17.21 desdits rayons lumineux avant passage dans le diffuseur optique 15.

Dans ce cas, le faisceau lumineux composite (après passage dans le diffuseur optique 15) résulte de la superposition des deux contributions représentées sur les figures 10A et 10B :
- une première contribution 18.1 (figure 10A) correspondant à la partie du faisceau lumineux composite 16-17 orientée par rapport à l'axe optique X-X suivant un angle positif comprenant ici les rayons lumineux 16.1 et 17.1, et
- une deuxième contribution 18.2 (figure 10B) correspondant à la partie du faisceau lumineux composite 16-17 orientée par rapport à l'axe optique X-X suivant un angle positif (comprenant ici les rayons lumineux 16.2 et 17.2.

Le faisceau lumineux composite résultant 18, issu de la juxtaposition de ces deux contributions 18.1 et 18.2, est représenté sur la figure 11. Les ouvertures angulaires de ce faisceau, auxquelles correspondent les dimensions ΔY₂ et ΔZ₂, peuvent alors atteindre des valeurs supérieures à celles que permettent d'obtenir les réalisations antérieures à une unique pièce monolithique constituant le système optique et le diffuseur optique.

La détermination de la forme et de la dimension des motifs 15.1 (qui peuvent être différents les uns des autres) à partir des réglementations en vigueur pour un feu déterminé fait partie des pratiques courantes à la portée de l'homme du métier.

Pour obtenir une ouverture angulaire horizontale de 45°, il a été constaté qu'une inclinaison des rayons lumineux du faisceau lumineux central 16 et/ou du faisceau lumineux périphérique 17 de l'ordre de 5 à 15° dans le plan horizontal (X-X ; Z-Z), de préférence comprise entre 10 et 12°, était adéquate.

On notera que l'invention décrite ci-dessus, en référence aux figures 6 à 11, représente le cas d'un faisceau lumineux périphérique 17 divergent, mais l'invention peut également être réalisée avec un faisceau lumineux périphérique convergent. Pour cela, la forme de la portion périphérique 14.3 du contour du système 14 est adaptée pour générer des rayons lumineux 17.1 et 17.2 inclinés par rapport à l'axe optique d'angles α17.11 négatif et α17.21 positif. Dans ce cas, les axes B-B et C-C de la première portion 14.31 et de la deuxième portion 14.32 de surface parabolique sont, en aval de la source lumineuse 12 (par rapport à la direction de propagation des rayons lumineux 17.1 et 17.2 émis par ladite source 12), situées respectivement du côté opposé par rapport de la portion de surface parabolique 14.31 ou 14.32 correspondante. Dès lors, afin d'obtenir une redistribution de la lumière jusqu'à 45° comme c'est le cas avec un faisceau divergent, il importe d'ajuster la distance entre les portions 14.11, 14.12, 14.31, 14.32 et le diffuseur optique 15, afin que le faisceau lumineux périphérique 17 atteigne ledit diffuseur 15 en étant non plus convergent mais bien divergent. On notera toutefois que ceci impose d'éloigner suffisamment le diffuseur optique 15 pour rendre le faisceau divergent et que, pour cette raison, le mode de réalisation des figures 6 à 11 est préféré.

Dans tous les cas, il importe, conformément à l'invention, que chaque motif 15.1 du diffuseur optique 15 reçoive une seule inclinaison de rayon lumineux.

Par convention, on oriente les plans et angles décrits ci-dessus dans le sens trigonométrique.

## Revendications

1. Système optique (14) pour générer, à partir d'une source lumineuse (12) et suivant un axe optique (X-X), un faisceau lumineux composite (16, 17) :
- comportant au moins un faisceau lumineux central (16) et au moins un faisceau lumineux périphérique (17) entourant ledit faisceau lumineux central (16), et
- destiné à être dirigé vers un diffuseur optique (15) pour répartir ledit faisceau lumineux composite (16, 17) d'une manière prédéterminée dans un premier plan (Y-Y, Z-Z) orthogonal audit axe optique (X-X), **caractérisé en ce qu'**il est configuré pour engendrer, dans un deuxième plan (X-X ; Z-Z) comprenant ledit axe optique (X-X), ledit faisceau lumineux central (16) et/ou ledit faisceau lumineux périphérique (17) de manière que des rayons lumineux (16.1, 16.2, 17.1, 17.2) dudit faisceau lumineux central (16) et/ou dudit faisceau lumineux périphérique (17) soient respectivement, de part et d'autre dudit axe optique (X-X), inclinés par rapport audit axe optique (X-X).

2. Système optique selon la revendication 1, configuré pour engendrer, dans ledit deuxième plan (X-X ; Z-Z), ledit faisceau lumineux central (16) et ledit faisceau lumineux périphérique (17) de manière que l'ensemble des rayons lumineux (16.1, 16.2, 17.1, 17.2) dudit faisceau lumineux central (16) et dudit faisceau lumineux périphérique (17) soient respectivement, de part et d'autre dudit axe optique (X-X), inclinés par rapport audit axe optique (X-X)

3. Système optique selon la revendication 1 ou 2, dans lequel, dans ledit deuxième plan (X-X ; Z-Z), l'ouverture angulaire du faisceau lumineux composite (16, 17) devant être au moins égale à 45° après avoir été réparti dans ledit premier plan (Y-Y, Z-Z) par ledit diffuseur optique (15), des rayons lumineux (16.1, 16.2, 17.1, 17.2) dudit faisceau lumineux central (16) et/ou dudit faisceau lumineux périphérique (17) sont respectivement, avant d'être répartis dans ledit premier plan (Y-Y, Z-Z) par ledit diffuseur optique (15), de part et d'autre dudit axe optique (X-X), inclinés d'un angle (α16.11, α16.21, α17.11, α17.21 ) compris entre 5° et 15° par rapport audit axe optique (X-X).

4. Système optique selon la revendication 3, dans lequel, dans ledit deuxième plan (X-X ; Z-Z), les rayons lumineux (16.1, 16.2, 17.1, 17.2) dudit faisceau lumineux central (16) et/ou dudit faisceau lumineux périphérique (17) sont respectivement, avant d'être répartis dans ledit premier plan (Y-Y, Z-Z) par ledit diffuseur optique (15), de part et d'autre dudit axe optique (X-X), inclinés d'un angle (α16.11, α16.21, α17.11, α17.21) compris entre 10° et 12° par rapport audit axe optique (X-X).

5. Système optique selon l'une des revendications 1 à 4, présentant, dans ledit deuxième plan (X-X ; Z-Z), une portion périphérique (14.3) comprenant une première (14.31) et une deuxième (14.32) portions de surface sensiblement parabolique :
- disposées respectivement de part et d'autre dudit axe optique (X-X) ;
- présentant un foyer (F) commun ; et
- configurées respectivement pour que, lorsque la source lumineuse (12) est disposée audit foyer (F) commun, des rayons lumineux (16.1, 16.2, 17.1, 17.2) émis par ladite source (12) soient respectivement, avant d'être répartis dans ledit premier plan (Y-Y, Z-Z) par ledit diffuseur optique (15), de part et d'autre dudit axe optique (X-X), inclinés par rapport audit axe optique (X-X) après réflexion sur lesdites portions de surface sensiblement parabolique (14.31, 14.32).

6. Système optique selon la revendication 5, dans lequel les axes (B-B, C-C) des première (14.31) et deuxième (14.32) portions de surface sensiblement parabolique sont, en aval de la source lumineuse (12) par rapport à la direction de propagation des rayons lumineux (16.1, 16.2, 17.1, 17.2) émis par ladite source lumineuse (12), situées respectivement du côté de la portion de surface parabolique (14.31, 14.32) correspondante.

7. Système optique selon la revendication 5 ou 6, formé en une unique pièce monolithique (14) dont la section comporte, dans ledit deuxième plan (X-X ; Z-Z), du côté où la source lumineuse (12) est destinée à être disposée, une portion centrale (14.11, 14.12) jointe à la portion périphérique (14.31, 14.32) au niveau d'une portion intermédiaire (14.21, 14.22) dont la section par ce deuxième plan est un segment de droite, ladite portion périphérique (14.31, 14.32) comportant les première (14.31) et deuxième (14.32) portions de surface sensiblement parabolique.

8. Système optique selon la revendication 7, dans lequel la section de la portion intermédiaire (14.21, 14.22) s'étend suivant une droite qui coupe l'axe optique en aval de la source lumineuse (12) par rapport à la direction de propagation des rayons lumineux (16.1, 16.2, 17.1, 17.2) émis par ladite source lumineuse (12).

9. Module optique comprenant :
- une source lumineuse unique (12) ; et
- un système optique (14) selon l'une des revendications précédentes pour générer, à partir de ladite source lumineuse (12) disposée au niveau de l'axe optique (X-X) dudit système optique (14), le faisceau lumineux composite (16, 17).

10. Module optique selon la revendication 9, comprenant en outre un diffuseur optique (15) pour répartir le faisceau lumineux composite (16, 17) d'une manière prédéterminée dans un plan (Y-Y, Z-Z) orthogonal audit axe optique (X-X).

11. Module optique selon la revendication 10, dans lequel ledit diffuseur optique (15) fait partie intégrante dudit système optique (14).
